(19) **Europäisches Patentamt**

**European Patent Office**

**Office européen des brevets**

(11) **EP 1 090 974 A1**

(12) **EUROPEAN PATENT APPLICATION**
published in accordance with Art. 158(3) EPC

(43) Date of publication:
**11.04.2001 Bulletin 2001/15**

(51) Int. Cl.$^7$: **C09K 11/08**

(21) Application number: **99918306.4**

(86) International application number:
**PCT/JP99/02345**

(22) Date of filing: **30.04.1999**

(87) International publication number:
**WO 00/60025 (12.10.2000 Gazette 2000/41)**

(84) Designated Contracting States:
**AT BE CH CY DE DK ES FI FR GB GR IE IT LI LU MC NL PT SE**

(30) Priority: **31.03.1999 JP 9380899**
**31.03.1999 JP 9383099**

(71) Applicant: **Somar Corporation**
**Tokyo 104-8109 (JP)**

(72) Inventors:
 • **HAYASHI, Torao**
  **Chuo-ku, Tokyo 104-8109 (JP)**
 • **MASHIMA, Shigeru**
  **Chuo-ku, Tokyo 104-8109 (JP)**
 • **SAKAGUCHI, Hiroshi**
  **Chuo-ku, Tokyo 104-8109 (JP)**
 • **ASAI, Satoshi**
  **Chuo-ku, Tokyo 104-8109 (JP)**

(74) Representative:
**Waldren, Robin Michael et al**
**Lloyd Wise, Treager & Co.,**
**Commonwealth House,**
**1-19 New Oxford Street**
**London WC1A 1LW (GB)**

(54) **LUMINANCE IMPROVER AND METHOD OF IMPROVING LUMINANCE FOR PHOSPHORESCENT SUBSTANCE, HIGH-LUMINANCE PHOSPHORESCENT COMPOSITIONS, AND HIGH-LUMINANCE PHOSPHORESCENT SHEET MADE USING THE SAME**

(57) Disclosed are a luminance improver for a luminous phosphor, comprising at least one of a fluorescent pigment having a fluorescence peak at a wavelength in the range of 300-480 nm, a benzotriazole compound and a benzophenone compound; a high luminance luminous composition comprising the above luminance improver and a luminous phosphor; and a high luminance luminous phosphorescent composition comprising the above luminous composition and a transparent resin. Thus, the luminance of the luminous phosphor can be improved without increasing the amount thereof.

**EP 1 090 974 A1**

## Description

Technical Field

This invention relates to a luminance improver for a luminous phosphor, to a method of improving luminance of a luminous phosphor, to a luminous phosphor composition having high luminance after grow characteristics and to a high luminance luminous phosphorescent sheet.

Background Art

Various kinds of luminous phosphors have been hitherto proposed. The luminous phosphors have properties to store light energy upon absorption thereof and to emit light. Based on this emission phenomenon, the luminous phosphors are utilized as various light emitting products such as light emitting sheets as advertising media, dials for clocks and gauges, fluorescent lamps and electric lamps, signboards luminous in nighttime, marks, and displays. It is of course desirable that the luminance (luminance of emission) of these light emitting products be high. The luminance can be improved by using the luminous phosphor in a large amount. In this case, however, the product costs become very high because of the expensiveness of the luminous phosphor.

In particular, in the case of light emitting sheets or indicators among the above light emitting products, the luminous phosphor is applied as an ink to desired portions thereof or incorporated into a resin which is thereafter shaped into a sheet or a molding. In this case, the luminous phosphor is desired to have a high luminance in order that the displays are legible clearly in dark places.

While the luminance of the luminous phosphor is proportional to the amount, there is a limitation in the amount thereof when the phosphor is incorporated into an ink or a resin, because of the film forming property and moldability. Thus, it is difficult to obtain luminance higher than a certain limit. Further, since the luminous phosphor is very expensive, the use thereof in a large amount causes a reduction of the yield and an increase of the production costs.

The present invention is aimed at the provision of a suitable agent and a method for improving luminance of a luminous phosphor and provision of a high luminance luminous phosphorescent composition and a high luminance luminous phosphorescent sheet. Another objective problem of the present invention is to provide a technique which can improve the luminance of a luminous phosphor without increasing the amount thereof.

Disclosure of the Invention

The present inventors have made an earnest study with a view toward solving the above problems and have found that a specific compound can improve the exciting power of a luminous agent. The present invention has been accomplished on the basis of this finding.

In accordance with the present invention there is provided a luminance improver for a luminous phosphor, comprising a fluorescent pigment having a fluorescence peak at a wavelength in the range of 300-480 nm.

The present invention also provides a luminance improver for a luminous phosphor, comprising a fluorescent pigment having a fluorescence peak at a wavelength in the range of 300-480 nm, and a benzotriazole compound and/or a benzophenone compound.

The present invention further provides a luminance improver for a luminous phosphor, comprising a benzotriazole compound and/or a benzophenone compound.

The present invention further provides a method of improving luminance of a luminous phosphor, characterized in that the luminous phosphor is mixed with one of the above-described luminance improvers.

The present invention further provides a high luminance luminous phosphorescent composition comprising (A) a luminous phosphor, (B) a fluorescent pigment having a fluorescence peak at a wavelength in the range of 300-480 nm, and (C) a transparent resin, wherein the amount of ingredient (B) is 5-40 parts by weight per 100 parts by weight of ingredient (A).

The present invention further provides a high luminance luminous phosphorescent composition comprising (A) a luminous phosphor, (B) a benzotriazole compound and/or a benzophenone compound, and (C) a transparent resin, wherein the amount of ingredient (B) is 0.5-20 parts by weight per 100 parts by weight of ingredient (A).

The present invention further provides a high luminance luminous phosphorescent sheet, comprising a substrate sheet, and a layer provided on said substrate sheet and comprising the above-described high luminance luminous phosphorescent.

The present invention is characterized in that a fluorescent pigment having a fluorescence peak at a wavelength in the range of 300-480 nm is used as a luminance improver for a luminous phosphor. The term "fluorescent pigment having a fluorescence peak at a wavelength in the range of 300-480 nm" is intended to refer to a fluorescent pigment which provides, when irradiated with ultraviolet rays, a fluorescent spectrum in which the peak is within the above range. In this case, it is preferred that the reflectance exceed 100 % at at least a part of the wavelength in the range of 300-480 nm.

It is also preferred that the fluorescent pigment show a reflectance of above 100 % for light of a wavelength between the peak wavelength minus 10 nm and the peak wavelength plus 10 nm.

Such a fluorescent pigment is known per se and is commercially feasible under a product name of FZ-1009 (manufactured by Sinleuch Inc.). Fluorescent pigments have characteristics that they emit light at specific wavelength upon receipt of energy of light such as sunlight or a fluorescent lamp. The fluorescent pigment is generally used in the form of particles having an average diameter of 0.1-100 μm, preferably 1-20 μm.

It is preferred that the luminance improver of the present invention comprise the fluorescent pigment and a benzotriazole compound and/or a benzophenone compound.

The benzotriazole compound and benzophenone compound can absorb light energy, especially light energy of an ultraviolet region, and covert same into thermal energy. It is considered that the thermal energy from the light energy can improve the excitation power, namely luminance, of the luminous agent. Examples of substances having such characteristics include benzotriazole compounds, such as 2-(2'-H-hydroxy-5'-methylphenyl)-benzotriazole, 2-[2'-hydroxy-3'-(3'',4'',5'',6''-tetrahydrophthalimidomethyl)-5'-methylphenyl]-benzotriaole, 2-(2'-hydroxy-3'-t-butyl-5'-methylphenyl)-5-chlorobenzotriazole, 2-(2'-H-hydroxy-3',5'-di-t-butylphenyl)-benzotriazole, 2-(2'-hydroxy-5'-t-octylphenyl)-benzotriazole, 2-(2'-hydroxy-3',5'-di-t-amylphenyl)-benzotriazole, 2-[2'-hydroxy-3',5'-bis($\alpha,\alpha$-dimethylbenzyl)phenyl]-2H-benzotriazole, 2-(2'-hydroxy-3',5'-di-t-butylphenyl)-5-chlorobenzotriazole, and benzophenone compounds such as 2-hydroxy-4-n-octyloxybenzophenone and 2-hydroxybenzophenone. Acrylic polymers having the above compounds in side chains thereof may also be used. The above compounds may be used singly or in combinations of two or more thereof. These compounds may be used in any desired form such as powder, liquid or granules but are preferably used in the form of a powder, when used for forming a coating by application of a coating liquid, from the standpoint of properties of the coating liquid (dispersibility and solubility) and properties of the coating (surface blocking properties and smoothness of coating).

The amount of the luminance improver is 5-40 parts by weight, preferably 5-25 parts by weight, per 100 parts by weight of the luminous phosphor, when the fluorescent pigment is used by itself. An amount of the fluorescent pigment below the above range is insufficient to provide luminance improving effect. When the amount is greater than the above range, on the other hand, any additional luminance improving effect is obtainable but, rather, there is caused a reduction of luminance.

When the fluorescent pigment and the benzotriazole compound and/or benzophenone compound are used in the form of a mixture as the luminance improver, the amount of the benzotriazole compound and/or benzophenone compound is preferably 0.5-20 parts by weight per 100 parts by weight of the luminous phosphor. An amount of the compound below the above range is insufficient to improve the luminance of the luminous phosphor. When the amount is greater than the above range, on the other hand, any additional luminance improving effect is obtainable but, rather, there are caused a reduction of luminance and deterioration of appearance due to an increase of yellow color of the coating. For reasons of luminance improving effect and appearance of coating, the amount of the compound is 1-10 parts by weight per 100 parts by weight of the luminous phosphor.

As the luminous phosphor there may be used any conventional luminous pigment for the purpose of the present invention. Examples of the luminous phosphors include a pigment obtained by dissolving a sulfide of a metal, such as barium, strontium, cadmium, calcium or zinc, or a fluorescent dye together with a pre-condensate of a condensation polymerizable synthetic resin and, subsequently, permitting the condensation to proceed to immobilize the coloring matter in the resin; a compound containing an oxide compound of the formula (1) shown below as matrix,

$$MAl_2O_4 \tag{1}$$

wherein M represents at least one element selected from the group consisting of calcium, strontium and barium; a magnesium-added oxide compound in which the above oxide compound added with magnesium is used as matrix; and a doped phosphor compound in which europium, dysprosium or neodymium is added as an activator to the above oxide compound or magnesium-added oxide compound. Illustrative of the luminous phosphor is N-Yako G-300M manufactured by Nemoto & Co., Ltd.

A compound of the formula (2)

$$(SrEu)\,Al_2O_4 \cdot [(SrEu)\,O \cdot n\,(Al_{1-a-b}B_bQ_a)\,_2O_3\,(OH)] \tag{2}$$

wherein Q represents at least one element selected from the group consisting of Bi, Ca, Mg and Mn,
0.0005 ≦ a ≦ 0.002,
0.001 ≦ b ≦ 0.35 and
1 ≦ n ≦ 7)

may also be used as the luminous phosphor.

For reasons of feasibility of clearer images, it is preferred that the above luminous phosphor be a substance which is white under the ordinary visible light (white luminous agent). Illustrative of such white luminous agent are a substance in which $Eu_2O_3$ is added to a luminous phosphor containing $SrAl_2O_4$:Eu,Dy (JP-A-H09-13028) and a substance in which calcium carbonate or silica is coated on surfaces of a luminous pigment. Such a white luminous agent is commercially available under a product name of WA-300 (manufactured by Nemoto & Co., Ltd.). These compounds have characteristics that they can store energy of light such as sunlight or light from lamps and can discharge the stored energy as light in the dark.

The luminous phosphor is generally used in the form of particles having an average diameter of 0.1-100 μm, preferably 1-50 μm.

Improvement of luminance of a phosphor may be achieved by addition of the above luminance improver to the phosphor. The phosphor added with the luminance improver may be a mixture of the phosphor and the luminance improver. In this case, it is preferred but is not essential that the luminance improver be in direct contact with the phosphor. They may be in indirect contact with each other through a third component such as an organic matter (e.g. a resin) or an inorganic matter (e.g. silica).

The high luminance luminous phosphorescent composition according to the present invention comprises (A) a luminous phosphor, (B) a luminance improver, and (C) a transparent resin, wherein the amount of luminance improver (B) is 5-40 parts by weight, preferably 5-20 parts by weight, per 100 parts by weight of the luminous phosphor (A). When the above-mentioned fluorescent pigment is used in conjunction with (D) a benzotriazole compound and/or a benzophenone compound as the luminance improver, the amount of the benzotriazole compound and/or benzophenone compound is 0.5-20 parts by weight, preferably 1-10 parts by weight, per 100 parts by weight of ingredient (A).

The luminous phosphor and the luminance improver may be as previously mentioned above.

The above composition of the present invention contains a transparent resin as an essential ingredient. Such a resin may be a thermoplastic resin, a hardenable resin or a rubber. The use of a hardenable resin is particularly preferred. Various kinds of known heat-curable and light-curable resins may be used as he hardenable resin. Examples of the thermosetting resins include urethane resins, epoxy resins, polyesters (alkyd resins), silicone resins and heat-curable acrylic resins. Examples of light-curable resins include acrylic resins. By using a hardenable resin as the resin binder, a high luminance luminous phosphorescent composition having excellent heat resistance and durability can be obtained.

The thermosetting resin is preferably a two-component composition composed of a main agent of a thermosetting resin component and a curing agent therefor.

The resin binder used in the present invention is preferably an aliphatic (non-aromatic) thermosetting resin containing no aromatic components. Particularly preferred is the use of an aliphatic urethane resin or a thermosetting acrylic resin, for reasons of excellent weatherability, heat resistance and adhesion to a substrate film. The aliphatic urethane resin is preferably a two-component type composition composed of a main agent of an aliphatic acrylic polyol and an auxiliary agent of non-yellowing aliphatic isocyanate (curing agent).

The aliphatic acrylic polyol is a polymer obtained by introducing hydroxyl groups into an acrylic polymer or copolymer. The introduction of the hydroxyl groups may be carried out by copolymerizing a hydroxyl group-containing acrylic ester monomer such as β-hydroxyethyl methacrylate with a non-aromatic acrylic monomer such as acrylic acid or methyl methacrylate.

The non-yellowing aliphatic isocyanate is obtained by reacting a polyol such as trimethylol propane, glycerin or a glycol with a water-added material such as hexamethylene diisocyanate, isophorone diisocyanate or methaxylene diisocyanate or a non-aromatic diisocyanate such as norbonen diisocyanate to form an adduct, followed by the removal of excess isocyanate.

When the composition containing the above aliphatic acrylic polyol and the non-yellowing isocyanate is used as the resin binder for the formation of a hardened resin film, it is easy to control the glass transition point and the elongation of a film. Additionally, it becomes possible to obtain a high luminance luminous phosphorescent composition having good durability, heat resistance and mechanical strengths.

The high luminance luminous phosphorescent composition may be used as a material for the production of moldings of various shapes. Various methods such as extrusion molding, casting molding, injection molding, calendar molding and spreading molding may be adopted for the production of the molding. The amount of the transparent resin in the molding is generally 5-90 % by weight, preferably 20-80 % by weight, based on the total weight of the luminous phosphor and the luminance improver.

The composition of the present invention can be applied onto a substrate sheet with a coating device to form a high luminance luminous phosphorescent layer. In this case, the amount of the transparent resin is generally 20-500 parts by weight based on 100 parts by weight of the total of the luminous phosphorescent pigment and the fluorescent pigment and, when used, the benzotriazole and/or benzophenone compound. An amount of the transparent resin below 20 parts by weight is insufficient to obtain satisfactory strengths of the phosphorescent layer. For reasons of strengths of coating, luminous characteristics and, in particular, visibility in the dark of the layer containing the luminous composition, the amount of 20-250 parts by weight is preferred.

In the case of the formation of a high luminance luminous phosphorescent layer on a substrate film, it is preferred that the glass transition point (hereinafter referred to as Tg) be in the range of 10-60°C when the sheet as produced be wound into a roll. A Tg of less than 10°C will unavoidably cause blocking during winding or storage. Too high a Tg in excess of 60°C will cause cracking of the coated layer during the winding.

The phosphorescent layer on the sheet is in the range of 20-200 μm, preferably 30-150 μm. When the thickness is less than 20 μm, visibility in the dark becomes insufficient. Too large a thickness in excess of 200 μm is undesirable from the standpoint of costs and workability.

In the case of the formation of a film of the high luminance luminous phosphorescent composition of the present invention, a solvent is not always necessary when the resin binder is a liquid resin. By blending the luminous phosphor with the liquid resin to form a coating liquid and by applying and drying the coating liquid in a conventional manner, a high luminance luminous phosphorescent layer can be formed. In this case, into the coating liquid may be incorporated various kinds of conventional additives such as a surf actant, an antifoaming agent and a stabilizer.

By providing a layer of the high luminance luminous phosphorescent composition of the present invention on a substrate sheet, there is obtained a high luminance luminous phosphorescent sheet. The substrate sheet may be, for example, a plastic film, paper, a laminate of a plastic film with paper, or synthetic paper. The use of a light screening substrate sheet is advantageous for reasons of luminance. As the light screening sheet, there may be mentioned a plastic sheet of a thermoplastic resin to which a white pigment such as titanium oxide, calcium carbonate or synthetic silica is added. The thermoplastic resin may be a known resin such as a polyester resin, an acrylic resin, a polycarbonate resin, a polyethersulfone resin, or a polyolefin resin. Above all, the use of a biaxially stretched polyethylene terephthalate sheet is suitable for reasons of dimensional stability, flatness and heat resistance. A laminate of a plastic sheet with paper can also be used. The light-screening substrate sheet preferably has a total light transmittance of 30% or less and is white in color.

A transparent substrate sheet may be used if desired. In this case, however, the luminance tends to be lowered as compared with a light screening substrate sheet. To prevent the reduction of luminance, a white layer can be provided on the luminous layer or on that surface of the substrate opposite to the luminous phosphorescent layer.

The substrate sheet generally has a thickness of 25-250 μm, preferably 38-100 μm for reasons of workability and processability.

In high luminance luminous phosphorescent sheet of the present invention, a primer layer may be provided between the substrate sheet and the phosphorescent layer, if necessary, to improve the bonding between the substrate sheet and the high luminance luminous phosphorescent layer. As the primer layer, a saturated polyester resin or an urethane resin may be generally used. The use of an urethane resin is particularly preferred for reasons of good bonding between the substrate sheet and the phosphorescent layer. The amount of the primer layer is generally 0.5-20 $g/m^2$, preferably 0.5-10 $g/m^2$. A coating amount of less than 0.5 $g/m^2$ will result in failure to obtain uniform bonding. A coating amount of more than 20 $g/m^2$ is undesirable from the standpoint of costs and workability.

To improve the bonding between the substrate sheet and the phosphorescent layer, a surface of the substrate sheet may be subjected to surface treatment such as a chemical etching treatment (e.g. chromic acid treatment), an ionization radiation treatment (e.g. corona treatment or plasma treatment), chemical or physical treatment (e.g. ozone exposure, flame exposure or high pressure electric shock exposure).

In the high luminance luminous phosphorescent sheet of the present invention, an adhesive layer may be provided on the high luminance luminous phosphorescent layer or on the opposite side thereof. When a transparent substrate sheet is used, the luminance is improved by using a white adhesive layer.

In the present invention, the luminous phosphor is used in conjunction with a fluorescent pigment having a fluorescent peak at specific wavelength and, optionally, a benzotriazole compound and/or a benzophenone compound, a higher luminance may be obtained than that of the luminous phosphor by itself. Therefore, when the same luminance is desired, the amount of the luminous phosphor cart be reduced so that the production costs can be reduced. Further, even when a white luminous agent having lower luminance as compared with ordinary luminous phosphor is used, it is possible to obtain luminance similar to that of the luminous phosphor which is not subjected to a whitening treatment.

In the foregoing description, the luminance improver for a phosphor comprises a fluorescent pigment having a fluorescence peak at a wavelength in the range of 300-480 nm, or the fluorescent pigment and a benzotriazole compound and/or a benzophenone compound. In the present invention, a benzotriazole compound and/or a benzophenone compound can be used alone as the luminance improver. The benzotriazole compound and benzophenone compound (these compounds will hereinafter referred to as luminance improver) can absorb light energy, especially light energy of an ultraviolet region, and covert same into thermal energy. The thermal energy from the light energy can improve the excitation power, namely luminance, of the luminous agent. Examples of benzotriazole and benzophenone compounds having such characteristics are those described in the foregoing. They can be used in the form and manner similar to those described above.

The amount of the luminance improver is 0.5-20 parts by weight, preferably 1-10 parts by weight, per 100 parts by weight of the luminous phosphor. An amount of the fluorescent pigment below the above range is insufficient to provide luminance improving effect. When the amount is greater than the above range, on the other hand, any additional luminance improving effect is obtainable but, rather, there are caused a reduction of luminance and deterioration of appearance due to an increase of yellow color of the coating.

As the luminous phosphor there may be used those described in the forgoing. They can be used in the form and manner similar to those described above.

The high luminance luminous phosphorescent composition according to the present invention using the luminance improver comprises (A) a luminous phosphor, (B) the luminance improver, and (C) a transparent resin, wherein the amount of luminance improver (B) is 0.5-20 parts by weight per 100 parts by weight of the luminous phosphor (A). The luminous phosphor, luminance improver and transparent resin may be those described in the foregoing.

The amount of the transparent resin (C) may be such as to allow the formation of a polymer molding. The molding method for the composition may be that described in the foregoing. The amount of the ingredients (A) and (B) in the molding is such that the total weight thereof is generally 5-90 % by weight, preferably 20-80 % by weight.

The composition of the present invention can be used in the same manner as described above to form a high luminance luminous phosphorescent layer. In this case, the amount of ingredient (C) is generally 20-500 parts by weight based on 100 parts by weight of the total of the luminous phosphorescent pigment (A) and the benzotriazole and/or benzophenone compound (B). An amount of the transparent resin below 20 parts by weight is insufficient to obtain satisfactory strengths of the phosphorescent layer. When the total amount of the ingredients (A) and (B) is less than 20 parts by weight, satisfactory visibility in the dark cannot be obtained. For reasons of strengths of coating, luminous characteristics and, in particular, visibility in the dark of the layer containing the luminous composition, the amount of the ingredient (C) is preferably 20-200 parts by weight.

According to the present invention, when the luminance improver in which the benzotriazole and/or benzophenone compound is used by itself is employed with the luminous phosphor, a higher luminance than the luminous phosphor can be obtained. Thus, even when a white luminous agent is used, it is possible to obtain luminance similar to that of the luminous phosphor which is not subjected to a whitening treatment.

Example

The present invention will be described in more detail by way of examples but is not limited thereto. The physical properties in each example were measured by the following methods.

(1) Luminance (1 minute value; mcd/m$^2$)

Sample is irradiated with a D65 standard light source at 1000 lux for 10 minutes in a room maintained at 23°C and a humidity of 65 %. Luminance is measured with a luminance meter Topkon BM-8 immediately after the lights out.

(2) Luminance C (mcd/m$^2$)

Luminance C is calculated using the following formula:

$$C = 100 \times B/rW$$

wherein

B: luminance measured (mcd/m$^2$)
W: weight of coating (g/m$^2$, measured with electronic force balance)
r: amount (% by weight) of luminous agent contained in dry coating.

(3) Luminance increase (%)

Luminance increase is calculated using the following formula:

$$\text{Luminance increase (\%)} = C_1/C_0 \times 100 - 100$$

wherein

$C_1$: luminance ($mcd/m^2$) of base sheet (control)

$C_0$: luminance ($mcd/m^2$) of sample.

Example 1

A coating liquid for forming a luminous layer was prepared by mixing 33.35 parts by weight of acrylpolyol (hydroxyl value: 17.5), 59.03 parts by weight of a luminous pigment (G-300M manufactured by Nemoto & Co., Ltd.), 5.0 parts by weight of a fluorescent pigment (FZ-1009 manufactured by Sinleuch Inc.), 1.68 parts by weight of an additive, 2.24 parts by weight of a curing agent (NCO: 12.6 %), 0.59 part by weight of silica (weight average particle diameter: 0.012 μm, Aerosil R-974 manufactured by Nippon Aerosil Inc.) and 3.11 parts by weight of a solvent (methylcellosolve acetate). An adhesive layer of an urethane resin having a thickness of 1 μm was formed on one side of a white polyethylene terephthalate sheet having a thickness of 50 μm. The above coating liquid was then applied onto the adhesive layer using an applicator and dried to form a luminous phosphorescent layer having a thickness of 50 μm and Tg of 35°C, thereby obtaining a high luminance luminous phosphorescent sheet.

Example 2

A coating liquid for forming a luminous layer was prepared by mixing 33.35 parts by weight of acrylpolyol (hydroxyl value: 17.5), 59.03 parts by weight of a luminous pigment (G-300M manufactured by Nemoto & Co., Ltd.), 5.0 parts by weight of a fluorescent pigment (FZ-1009 manufactured by Sinleuch Inc.), 5.0 parts by weight of a benzotriazol compound (Tinuvin 328 manufactured by Chiba Specialty Chemicals, Inc.), 1.68 parts by weight of an additive, 2.24 parts by weight of a curing agent (NCO: 12.6 %), 0.59 part by weight of silica (weight average particle diameter: 0.012 μm, Aerosil R-974 manufactured by Nippon Aerosil Inc.) and 3.11 parts by weight of a solvent (methylcellosolve acetate). An adhesive layer of an urethane resin having a thickness of 1 μm was formed on one side of a white polyethylene terephthalate sheet having a thickness of 50 μm. The above coating liquid was then applied onto the adhesive layer using an applicator and dried to form a luminous phosphorescent layer having a thickness of 50 μm and Tg of 35°C, thereby obtaining a high luminance luminous phosphorescent sheet.

Example 3

Example 2 was repeated in the same manner as described except that a benzophenone compound (Timasov 81 manufactured by Chiba Specialty Chemicals, Inc.) was substituted for the benzotriazole compound to obtain a high luminance luminous phosphorescent sheet.

Example 4

A high luminance luminous phosphorescent sheet was obtained in the same manner as that described in Example 1-3 except that a luminous pigment (WA-300 manufactured by Nemoto & Co., Ltd.) was used in Example 1-3.

Examples 5-14

High luminance luminous phosphorescent sheets were obtained in the same manner as those described in Examples 1-4 except that proportions of respective ingredients in Examples 1-4 were changed as shown in Table 2.

Comparative Examples 1-6

Luminous phosphorescent sheets were obtained in the same manner as those described in Examples 1-4 except that amounts of the benzotriazole compound or benzophenone compound in Examples 1-4 were changed as shown in Table 3.

Comparative Example 7

Example 5 was repeated in the same manner as described except that a hindered amine compound (Tinuvin 622LD manufactured by Chiba Specialty Chemicals, Inc.) was substituted for the benzotriazol compound, thereby obtaining a luminous phosphorescent sheet.

Base sheets (control for comparison purposes) 1 and 2 and each of the sheets obtained in Examples 1-5 were tested for evaluation of the performance thereof. The results are shown in Table 1.

Each of the sheets obtained in Examples 5-14 were tested for evaluation of the performance thereof. The results are shown in Tables 2-1 and 2-2.

Each of the sheets obtained in Comparative Examples 1-7 were tested for evaluation of the performance thereof. The results are shown in Tables 3-1 and 3-2.

The above additive was composed of 0.37 part by weight of an acrylic-type source preventing agent, 0.09 part by weight of an acrylic-type leveling agent, 0.92 part by weight of an acrylic-type anti-foaming agent and 0.30 part by weight of a glycidyl group-containing silane coupling agent (total amount: 1.68 parts by weight).

Table 1

| | Base sheet | | Example | | | |
|---|---|---|---|---|---|---|
| | 1 | 2 | 1 | 2 | 3 | 4 |
| Composition | | | | | | |
| Acrylpolyol (hydroxyl value: 17.5) | 33.35 | 33.5 | 33.35 | 33.35 | 33.35 | 33.35 |
| Luminous pigment (G-300M) | 59.03 | | | 59.03 | 59.03 | 59.03 | |
| Luminous pigment (WA-300) | | 59.03 | | | | 59.03 |
| Luminous pigment (FZ-1009) | | | 5.00 | 5.00 | 5.00 | 5.00 |
| Benzotriazol Compound (Tinuvin 328) | | | | 5.00 | | |
| Benzophenone Compound (Timasov 81) | | | | | 5.00 | |
| Hindered amine Compound (Tinuvin 622LD) | | | | | | |
| Additive | 1.68 | 1.68 | 1.68 | 1.68 | 1.68 | 1.68 |
| Curing agent (NCO: 12.6%) | 2.24 | 2.24 | 2.24 | 2.24 | 2.24 | 2.24 |
| Silica | 0.59 | 0.59 | 0.59 | 0.59 | 0.59 | 0.59 |
| Solvent | 3.11 | 3.11 | 3.11 | 3.11 | 3.11 | 3.110 |
| Evaluation | | | | | | |
| (1) Luminance (1 minute value; mcd/m$^2$) | 2000 | 1200 | 2100 | 2200 | 2200 | 1290 |
| (2) Luminance (mcd/g) | 11.0 | 5.8 | 11.6 | 12.7 | 12.7 | 6.1 |
| (3) Luminance increasing (%) | - | - | 5 | 15 | 15 | 5 |

Table 2-1

| | Example | | | | | |
|---|---|---|---|---|---|---|
| | 5 | 6 | 7 | 8 | 9 | 10 |
| Composition | | | | | | |
| Acrylpolyol (hydroxyl value: 17.5) | 33.35 | 33.35 | 33.35 | 33.35 | 33.35 | 33.35 |
| Luminous pigment (G-300M) | | | 59.03 | 59.03 | 59.03 | |
| Luminous pigment (WA-300) | 59.03 | 59.03 | | | | 59.03 |
| Luminous pigment (FZ-1009) | 5.0 | 5.0 | 15.0 | 15.0 | 15.0 | 15.0 |
| Benzotriazol Compound (Tinuvin 328) | 5.0 | | | 10.0 | | |
| Benzophenone Compound (Timasov 81) | | 5.0 | | | 10.0 | |
| Hindered amine Compound (Tinuvin 622LD) | | | | | | |
| Additive | 1.68 | 1.68 | 1.68 | 1.68 | 1.68 | 1.68 |
| Curing agent (NCO: 12.6%) | 2.24 | 2.24 | 2.24 | 2.24 | 2.24 | 2.24 |
| Silica | 0.59 | 0.59 | 0.59 | 0.59 | 0.59 | 0.59 |
| Solvent | 3.11 | 3.11 | 3.11 | 3.11 | 3.11 | 3.11 |
| Evaluation | | | | | | |
| (1) Luminance (1 minute value; mcd/m$^2$) | 1380 | 1380 | 2220 | 2280 | 2280 | 1340 |
| (2) Luminance (mcd/g) | 6.7 | 6.7 | 11.8 | 13.0 | 13.0 | 6.3 |
| (3) Luminance increasing (%) | 15 | 15 | 7 | 18 | 18 | 9 |

Table 2-2

| | Example | | | |
|---|---|---|---|---|
| | 11 | 12 | 13 | 14 |
| Composition | | | | |
| Acrylpolyol (hydroxyl value: 17.5) | 33.35 | 33.35 | 33.35 | 33.35 |
| Luminous pigment (G-300M) | | | 53.13 | |
| Luminous pigment (WA-300) | 59.03 | 59.03 | | 53.13 |
| Luminous pigment (FZ-1009) | 15.0 | 15.0 | 5.0 | 5.0 |
| Benzotriazol Compound (Tinuvin 328) | 10.0 | | 5.0 | 5.0 |
| Benzophenone Compound (Timasov 81) | | 10.0 | | |
| Hindered amine Compound (Tinuvin 622LD) | | | | |
| Additive | 16.8 | 16.8 | 16.8 | 16.8 |
| Curing agent (NCO: 12.6%) | 2.24 | 2.24 | 2.24 | 2.24 |
| Silica | 0.59 | 0.59 | 0.59 | 0.59 |
| Solvent | 3.11 | 3.11 | 3.11 | 3.11 |
| Evaluation | | | | |
| (1) Luminance (1 minute value; $mcd/m^2$) | 1410 | 1410 | 2000 | 1200 |
| (2) Luminance (mcd/g) | 6.8 | 6.8 | 12.0 | 6.3 |
| (3) Luminance increasing (%) | 17 | 17 | 9 | 9 |

Table 3-1

|  | Comparative Example | | | |
|---|---|---|---|---|
|  | 1 | 2 | 3 | 4 |
| Composition | | | | |
| Acrylpolyol (hydroxyl value: 17.5) | 33.35 | 33.35 | 33.35 | 33.35 |
| Luminous pigment (G-300M) | 59.03 | | 59.03 | |
| Luminous pigment (WA-300) | | 59.03 | | 59.03 |
| Luminous pigment (FZ-1009) | 0.5 | 0.5 | 30.0 | 30.0 |
| Benzotriazol Compound (Tinuvin 328) | | | | |
| Benzophenone Compound (Timasov 81) | | | | |
| Hindered amine Compound (Tinuvin 622LD) | | | | |
| Additive | 1.68 | 1.68 | 1.68 | 1.68 |
| Curing agent (NCO: 12.6%) | 2.24 | 2.24 | 2.24 | 2.24 |
| Silica | 0.59 | 0.59 | 0.59 | 0.59 |
| Solvent | 3.11 | 3.11 | 3.11 | 3.11 |
| Evaluation | | | | |
| (1) Luminance (1 minute value; $mcd/m^2$) | 2000 | 1200 | 1860 | 1030 |
| (2) Luminance (mcd/g) | 11.0 | 5.8 | 10.6 | 5.3 |
| (3) Luminance increasing (%) | 0 | 0 | -4 | -9 |

Table 3-2

| | Comparative Example | | |
|---|---|---|---|
| | 5 | 6 | 7 |
| Composition | | | |
| Acrylpolyol (hydroxyl value: 17.5) | 33.35 | 33.35 | 33.35 |
| Luminous pigment (G-300M) | 59.03 | | |
| Luminous pigment (WA-300) | | 59.03 | 59.03 |
| Luminous pigment (FZ-1009) | 15.0 | 15.0 | |
| Benzotriazol Compound (Tinuvin 328) | 30.0 | | |
| Benzophenone Compound (Timasov 81) | | 30.0 | |
| Hindered amine Compound (Tinuvin 622LD) | | | 5.0 |
| Additive | 1.68 | 1.68 | 1.68 |
| Curing agent (NCO: 12.6%) | 2.24 | 2.24 | 2.24 |
| Silica | 0.59 | 0.59 | 0.59 |
| Solvent | 3.11 | 3.11 | 3.11 |
| Evaluation | | | |
| (1) Luminance (1 minute value; mcd/m$^2$) | 1830 | 1030 | 1290 |
| (2) Luminance (mcd/g) | 10.4 | 5.3 | 6.1 |
| (3) Luminance increasing (%) | -6 | -9 | 5 |

It will be appreciated that Examples 13 and 14 which use a luminous phosphor pigment in an amount smaller than that in the base sheets give luminance comparable to the base sheets and that Examples 1-12 give higher luminance as compared with those of the base sheets and Comparative Examples 1-6.

Example 15

A coating liquid for forming a luminous layer was prepared by mixing 33.35 parts by weight of acrylpolyol (hydroxyl value: 17.5), 53.13 parts by weight of a luminous pigment (G-300M manufactured by Nemoto & Co., Ltd.), 5.0 parts by weight of a benzotriazol compound (Tinuvin 328 manufactured by Chiba Specialty Chemicals, Inc.), 1.68 parts by weight of an additive, 2.24 parts by weight of a curing agent (NCO: 12.6 %), 0.59 part by weight of silica (weight average particle diameter: 0.012 μm, Aerosil R-974 manufactured by Nippon Aerosil Inc.) and 3.11 parts by weight of a solvent (methylcellosolve acetate). The above additive was composed of 0.37 part by weight of an acrylic-type source preventing agent, 0.09 part by weight of an acrylic-type leveling agent, 0.92 part by weight of an acrylic-type anti-foaming agent and 0.30 part by weight of a glycidyl group-containing silane coupling agent (total amount: 1.68 parts by weight).

An adhesive layer of an urethane resin having a thickness of 1 μm was formed on one side of a white polyethylene terephthalate sheet having a thickness of 50 μm. The above coating liquid was then applied onto the adhesive layer using an applicator and dried to form a luminous phosphorescent layer having a thickness of 50 μm and Tg of 35°C, thereby obtaining a high luminance luminous phosphorescent sheet.

Example 16

A high luminance luminous phosphorescent sheet was obtained in the same manner as that described in Example 15 except that a luminous pigment (WA-300 manufactured by Nemoto & Co., Ltd.) was used in Example 15. The physical properties of the sheet are shown in Table 4.

Examples 17-24

High luminance luminous phosphorescent sheets were obtained in the same manner as those described in Examples 15 and 16 except that proportions of respective ingredients in Examples 15 and 16 were changed as shown in Tables 4-1 and 4-2. The physical properties of the sheets are shown in Tables 4-1 and 4-2.

Comparative Examples 8-15

Luminous phosphorescent sheets were obtained in the same manner as those described in Examples 17-20 except that amounts of the benzotriazole compound or benzophenone compound in Examples 17-20 were changed as shown in Table 5-1 and 5-2. The physical properties of the sheets are shown in Tables 5-1 and 5-2.

Comparative Example 16

Example 15 was repeated in the same manner as described except that a hindered amine compound (Tinuvin 622LD manufactured by Chiba Specialty Chemicals, Inc.) was substituted for the benzotriazol compound, thereby obtaining a luminous phosphorescent sheet. The physical properties of the sheet are shown in Table 5-2.
It will be appreciated that Examples 15 and 16 which use a luminous phosphor pigment in an amount smaller than that in the base sheets give luminance comparable to the base sheets and that Examples 17-22 give higher luminance as compared with those of the base sheets 3 and 4 and Comparative Examples 8-15. No luminance improving effect is seen when the compound of Comparative Example 16 is used.

Table 4-1

|  | Base sheet | | Example | | | |
| --- | --- | --- | --- | --- | --- | --- |
|  | 1 | 2 | 15 | 16 | 17 | 18 |
| Composition |  |  |  |  |  |  |
| Acrylpolyol (hydroxyl value: 17.5) | 33.35 | 33.35 | 33.35 | 33.35 | 33.35 | 33.35 |
| Luminous pigment (G-300M) | 59.03 |  | 53.13 |  | 59.03 |  |
| Luminous pigment (WA-300) |  | 59.03 |  | 53.13 |  | 59.03 |
| Benzotriazol Compound (Tinuvin 328) |  |  | 5.0 | 5.0 | 0.5 | 0.5 |
| Benzophenone Compound (Timasov 81) |  |  |  |  |  |  |
| Hindered amine Compound (Tinuvin 622LD) |  |  |  |  |  |  |
| Additive | 1.68 | 1.68 | 1.68 | 1.68 | 1.68 | 1.68 |
| Curing agent (NCO: 12.6%) | 2.24 | 2.24 | 2.24 | 2.24 | 2.24 | 2.24 |
| Silica | 0.59 | 0.59 | 0.59 | 0.59 | 0.59 | 0.59 |
| Solvent | 3.11 | 3.11 | 3.11 | 3.11 | 3.11 | 3.11 |
| Evaluation |  |  |  |  |  |  |
| (1) Luminance (1 minute value; mcd/m$^2$) | 2000 | 1200 | 2000 | 1220 | 2200 | 1260 |
| (2) Luminance (mcd/g) | 11.0 | 5.8 | 12.1 | 6.5 | 12.0 | 6.4 |
| (3) Luminance increasing (%) | - | - | 10 | 12 | 9 | 10 |

Table 4-2

| | Example | | | | | |
|---|---|---|---|---|---|---|
| | 19 | 20 | 21 | 22 | 23 | 24 |
| Composition | | | | | | |
| Acrylpolyol (hydroxyl value: 17.5) | 33.35 | 33.35 | 33.35 | 33.35 | 33.35 | 33.35 |
| Luminous pigment (G-300M) | 59.03 | | 59.03 | | 59.03 | |
| Luminous pigment (WA-300) | | 59.03 | | 59.03 | | 59.03 |
| Benzotriazol Compound (Tinuvin 328) | | | 5.0 | 5.0 | 10.00 | 10.00 |
| Benzophenone Compound (Timasov 81) | 0.5 | 0.5 | | | | |
| Hindered amine Compound (Tinuvin 622LD) | | | | | | |
| Additive | 1.68 | 1.68 | 1.68 | 1.68 | 1.68 | 1.68 |
| Curing agent (NCO: 12.6%) | 2.24 | 2.24 | 2.24 | 2.24 | 2.24 | 2.24 |
| Silica | 0.59 | 0.59 | 0.59 | 0.59 | 0.59 | 0.59 |
| Solvent | 3.11 | 3.11 | 3.11 | 3.11 | 3.11 | 3.11 |
| Evaluation | | | | | | |
| (1) Luminance (1 minute value; mcd/m$^2$) | 2180 | 1260 | 2300 | 1340 | 2070 | 1200 |
| (2) Luminance (mcd/g) | 11.8 | 6.3 | 12.3 | 6.6 | 11.3 | 6.0 |
| (3) Luminance increasing (%) | 7 | 9 | 12 | 14 | 3 | 3 |

Table 5-1

|  | Comparative Example | | | | |
|---|---|---|---|---|---|
|  | 8 | 9 | 10 | 11 | 12 |
| Composition |  |  |  |  |  |
| Acrylpolyol (hydroxyl value: 17.5) | 33.35 | 33.35 | 33.35 | 33.35 | 33.35 |
| Luminous pigment (G-300M) | 59.03 | 59.03 | 59.03 | 59.03 |  |
| Luminous pigment (WA-300) |  |  |  |  | 59.03 |
| Benzotriazol Compound (Tinuvin 328) | 0.2 | 20.0 |  |  | 0.2 |
| Benzophenone Compound (Timasov 81) |  |  | 0.2 | 20.0 |  |
| Hindered amine Compound (Tinuvin 622LD) |  |  |  |  |  |
| Additive | 1.68 | 1.68 | 1.68 | 1.68 | 1.68 |
| Curing agent (NCO: 12.6%) | 2.24 | 2.24 | 2.24 | 2.24 | 2.24 |
| Silica | 0.59 | 0.59 | 0.59 | 0.59 | 0.59 |
| Solvent | 3.11 | 3.11 | 3.11 | 3.11 | 3.11 |
| Evaluation |  |  |  |  |  |
| (1) Luminance (1 minute value; mcd/m$^2$) | 2000 | 1650 | 2000 | 1800 | 1160 |
| (2) Luminance (mcd/g) | 11.1 | 10.6 | 11.0 | 10.8 | 5.8 |
| (3) Luminance increasing (%) | 1 | -4 | 0 | -2 | 0 |

Table 5-2

| | Comparative Example | | | |
|---|---|---|---|---|
| | 13 | 14 | 15 | 16 |
| Composition | | | | |
| Acrylpolyol (hydroxyl value: 17.5) | 33.35 | 33.35 | 33.35 | 33.35 |
| Luminous pigment (G-300M) | | | | 59.03 |
| Luminous pigment (WA-300) | 59.03 | 59.03 | 59.03 | |
| Benzotriazol Compound (Tinuvin 328) | 20.0 | | | |
| Benzophenone Compound (Timasov 81) | | 0.2 | 20.0 | |
| Hindered amine Compound (Tinuvin 622LD) | | | | 5.0 |
| Additive | 1.68 | 1.68 | 1.68 | 1.68 |
| Curing agent (NCO: 12.6%) | 2.24 | 2.24 | 2.24 | 2.24 |
| Silica | 0.59 | 0.59 | 0.59 | 0.59 |
| Solvent | 3.11 | 3.11 | 3.11 | 3.11 |
| Evaluation | | | | |
| (1) Luminance (1 minute value; mcd/m$^2$) | 1000 | 1190 | 1020 | 1050 |
| (2) Luminance (mcd/g) | 5.7 | 5.8 | 5.7 | 5.8 |
| (3) Luminance increasing (%) | -2 | 0 | -2 | 0 |

**Claims**

1. A luminance improver for a luminous phosphor, comprising a fluorescent pigment having a fluorescence peak at a wavelength in the range of 300-480 nm.

2. A luminance improver for a luminous phosphor, comprising a fluorescent pigment having a fluorescence peak at a wavelength in the range of 300-480 nm, and a benzotriazole compound and/or a benzophenone compound.

3. A luminance improver for a luminous phosphor, comprising a benzotriazole compound and/or a benzophenone compound.

4. A method of improving luminance of a luminous phosphor, characterized in that said luminous phosphor is mixed with one of said luminance improvers according to claims 1-3.

5. A high luminance luminous phosphorescent composition comprising (A) a luminous phosphor, (B) a fluorescent pigment having a fluorescence peak at a wavelength in the range of 300-480 nm, and (C) a transparent resin, wherein the amount of ingredient (B) is 5-40 parts by weight per 100 parts by weight of ingredient (A).

6. A high luminance luminous phosphorescent composition comprising (A) a luminous phosphor, (B) a benzotriazole compound and/or a benzophenone compound, and (C) a transparent resin, wherein the amount of ingredient (B) is 0.5-20 parts by weight per 100 parts by weight of ingredient (A).

7. A high luminance luminous phosphorescent composition according to claim 5, further comprising (D) a benzotriazole compound and/or a benzophenone compound in an amount of 0.5-20 parts by weight per 100 parts by weight of ingredient (A).

8. A high luminance luminous phosphorescent composition according to any one of claims 5-7, wherein ingredient (A) is a white luminous agent.

**9.** A high luminance luminous phosphorescent composition according to any one of claims 5-8, wherein said luminous phosphor is an aluminate luminous phosphor.

**10.** A high luminance luminous phosphorescent sheet, comprising a substrate sheet, and a layer provided on said substrate sheet and comprising a high luminance luminous phosphorescent composition according to any one of claims 5-9.

# INTERNATIONAL SEARCH REPORT

| | International application No. |
|---|---|
| | PCT/JP99/02345 |

**A. CLASSIFICATION OF SUBJECT MATTER**
Int.Cl⁶ C09K11/08, C08L101/00, C08K3/00, 5/07, 5/3457

According to International Patent Classification (IPC) or to both national classification and IPC

**B. FIELDS SEARCHED**

Minimum documentation searched (classification system followed by classification symbols)
Int.Cl⁶ C09K11/00-11/89, C08K3/00, 5/07, 5/3457

Documentation searched other than minimum documentation to the extent that such documents are included in the fields searched

Electronic data base consulted during the international search (name of data base and, where practicable, search terms used)
CA (STN)

**C. DOCUMENTS CONSIDERED TO BE RELEVANT**

| Category* | Citation of document, with indication, where appropriate, of the relevant passages | Relevant to claim No. |
|---|---|---|
| X | JP, 10-36834, A (Riken Vinyl Industry Co., Ltd.), 10 February, 1998 (10. 02. 98), Claims ; Par. Nos. [0010], [0011] ; Examples (Family: none) | 1-10 |
| A | JP, 7-247391, A (K.K. Matsui Shikiso Kagaku Kogyosho), 26 September, 1995 (26. 09. 95) (Family: none) | 1-10 |
| A | JP, 8-183955, A (YKK Corp.), 16 July, 1996 (16. 07. 96) & CA, 2165379, A & EP, 721007, A1 & US, 5607621, A & CN, 1133874, A & TW, 336944, A | 1-10 |
| A | JP, 9-40944, A (Seiko Instruments Inc.), 10 February, 1997 (10. 02. 97) (Family: none) | 1-10 |
| A | JP, 9-95671, A (Toshiba Corp.), 8 April, 1997 (08. 04. 97) (Family: none) | 1-10 |

☐ Further documents are listed in the continuation of Box C. ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | |
| "O" document referring to an oral disclosure, use, exhibition or other means | "Y" document of particular relevance; the claimed invention cannot be considered to involve an inventive step when the document is combined with one or more other such documents, such combination being obvious to a person skilled in the art |
| "P" document published prior to the international filing date but later than the priority date claimed | "&" document member of the same patent family |

| Date of the actual completion of the international search | Date of mailing of the international search report |
|---|---|
| 9 August, 1999 (09. 08. 99) | 17 August, 1999 (17. 08. 99) |

| Name and mailing address of the ISA/ | Authorized officer |
|---|---|
| Japanese Patent Office | |
| Facsimile No. | Telephone No. |

Form PCT/ISA/210 (second sheet) (July 1992)